Europäisches Patentamt

European Patent Office

Office européen des brevets

(11) Numéro de publication: **0 409 705 A1**

## DEMANDE DE BREVET EUROPEEN

(21) Numéro de dépôt: 90402030.2

(22) Date de dépôt: **13.07.90**

(51) Int. Cl.5: **G01N 27/44**

(30) Priorité: **17.07.89 FR 8909580**

(43) Date de publication de la demande:
**23.01.91 Bulletin 91/04**

(84) Etats contractants désignés:
**BE DE DK ES GB IT NL SE**

(71) Demandeur: **COMMISSARIAT A L'ENERGIE
ATOMIQUE Etablissement de Caractère
Scientifique Technique et Industriel
31/33, rue de la Fédération
F-75015 Paris(FR)**

(72) Inventeur: **Friconneau, Claude
Boulevard de Varzelles
F-04100 Manosque(FR)**
Inventeur: **Flaven, André
Rue du Castellas
F-04100 Manosque(FR)**
Inventeur: **Granzotto, Francis
Mas La Poterie
F-13330 Pelissanne(FR)**

(74) Mandataire: **Mongrédien, André et al
c/o BREVATOME 25, rue de Ponthieu
F-75008 Paris(FR)**

(54) **Dispositif de production en continu d'une solution ionique étalon.**

(57) Ce dispositif comprend essentiellement une cellule coulométrique (10) comportant une enceinte étanche (12, 14, 30) en isolant électrique, renfermant une cathode (20) et une anode (22) disposées en regard et définissant entre elles un espace (21) destiné au passage de la solution à enrichir par lesdits ions, des conduites respectivement d'amenée (42) de la solution à enrichir en ions et d'évacuation (44) de la solution enrichie en ions, débouchant dans ledit espace (21), des conducteurs d'alimentation électrique (24, 26) de la cathode et de l'anode, la cathode et/ou l'anode contenant ces ions et étant apte à les libérer lors du passage du courant, et une source d'alimentation électrique (28), stabilisée en courant, reliée auxdits connecteurs (24, 26).

FIG.1

## DISPOSITIF DE PRODUCTION EN CONTINU D'UNE SOLUTION IONIQUE ETALON

L'invention se rapporte à un dispositif de production en continu d'une solution ionique étalon dans une très large gamme de concentrations. Ce dispositif est en particulier utilisé dans des chaînes de mesure de la concentration de certains ions en solution aqueuse et, en particulier, des ions halogénure. Ce dispositif qui peut être intégré à la chaîne de mesure permet un étalonnage fiable, précis, rapide et simple de cette chaîne de mesure.

Il est bien connu que les aciers inoxydables sont attaqués par les solutions aqueuses contenant des halogénures, même lorsque ceux-ci sont présents en faible quantité. En particulier, les chlorures peuvent provoquer d'importants dégâts sur les turbines haute pression. Aussi, les principaux fabricants de ces turbines recommandent fortement de maintenir en-dessous de 5 ppb les concentrations en chlorure de la vapeur haute pression.

Aussi est-il nécessaire de détecter en continu la présence de chlorure dans l'eau, et ce à des concentrations très faibles.

Les chaînes de mesure les plus performantes pour le dosage en continu des chlorures requièrent un étalonnage mensuel. Cet étalonnage fait intervenir le plus souvent la préparation de solutions étalons secondaires obtenues par dilutions successives d'une solution étalon primaire, avec de l'eau déminéralisée.

Les appareils les plus performants essaient de limiter les phases opératoires externes à la préparation de la solution étalon primaire, en intégrant certaines fonctions, telles que la dilution, au dispositif d'étalonnage. Cette intégration conduit à des dispositifs d'étalonnage généralement délicats à mettre en oeuvre.

Néanmoins, cette technique d'étalonnage par dilution présente un certain nombre d'inconvénients comme :
- la limitation vers les faibles concentrations des étalons,
- les risques d'erreur provenant d'une suite d'interventions devant assurer l'introduction des étalons primaire ou secondaire,
- la difficulté de manipulation d'une eau déminéralisée pour dilution à suffisamment bas niveau en ions chlorure.

L'invention a justement pour objet un dispositif de production en continu d'une solution ionique étalon permettant de remédier à ces différents inconvénients. En particulier, le dispositif de l'invention permet l'obtention d'une manière simple et rapide, sans risque d'erreur, de solutions étalons en ions dans une très large gamme de concentrations, et plus spécialement en ions chlorure.

Le principe de l'invention est basé sur la production coulométrique d'ions, à des concentrations bien déterminées, dans une solution aqueuse circulant entre deux électrodes spécifiques.

De façon plus précise, l'invention a pour objet un dispositif de production d'une solution ionique étalon contenant des ions déterminés à une concentration déterminée, caractérisé en ce qu'il comprend essentiellement une cellule coulométrique comportant une enceinte étanche en isolant électrique, renfermant une cathode et une anode disposées en regard et définissant entre elles un espace destiné au passage de la solution à enrichir par lesdits ions, des conduites respectivement d'amenée de la solution à enrichir en ions et d'évacuation de la solution enrichie en ions, débouchant dans ledit espace, des conducteurs d'alimentation électrique de la cathode et de l'anode, la cathode et/ou l'anode contenant ces ions et étant apte à les libérer lors du passage du courant, et une source d'alimentation électrique, stabilisée en courant, reliée auxdits connecteurs.

Le dispositif conforme à l'invention ne permet la production d'ions que lors de l'application d'un courant sur les électrodes ; l'éventuelle fuite ionique qui est liée uniquement au produit de solubilité des électrodes dans la solution est tout à fait négligeable.

L'utilisation selon l'invention d'une alimentation à courant stabilisé permet, compte tenu du débit de la solution ionique entre les deux électrodes, de produire la quantité d'ions nécessaire à l'obtention de la solution ionique étalon choisie ; la quantité d'ions libérée par l'anode et/ou la cathode est une fonction croissante de l'intensité du courant électrique.

Le dispositif conforme à l'invention permet la production de solution étalon dans une très large gamme de concentrations allant de $10^{-7}$ M (mol/l) à $10^{-3}$ M avec une bonne efficacité. Les concentrations d'ions que l'on peut produire vers les bas niveaux (inférieurs à $10^{-7}$ M), avec le dispositif de l'invention, sont largement en deçà du domaine de sensibilité des meilleurs systèmes actuellement connus. Vers les fortes concentrations (supérieures à $10^{-3}$ M) les limites du dispositif de l'invention sont imposées par la forme et les dimensions de la cellule coulométrique, les lois de la coulométrie et les potentiels d'oxydo-réduction des électrodes.

Selon un mode préféré de réalisation du dispositif de l'invention, l'enceinte est constituée de deux plaques support isolantes en regard, revêtues respectivement de l'anode et de la cathode et assemblées de manière étanches par leurs bords. Ces plaques, en plus de leur isolation électrique, doivent être résistantes chimiquement à la solution ionique à produire. Dans le cas d'ions halogénure, ces plaques peuvent être en polychlorure de vinyle ou en Plexiglas. Avantageusement, ces plaques isolantes sont chacune équipée d'une rainure dans laquelle sont logées respectivement l'anode et la cathode.

Une variante préférentielle de réalisation de la cellule coulométrique consiste à intercaler entre les deux plaques support isolantes une plaque intermédiaire en matériau isolant électriquement et suffisamment élastique pour constituer un joint d'étanchéité, cette plaque intermédiaire présentant en regard de l'anode et de la cathode une fente destinée au passage de la solution ionique. Comme matériau isolant constituant cette plaque, on peut citer la silicone, le polyéthylène; en particulier on utilise du Téflon.

Afin d'homogénéiser les ions de la solution étalon, la fente de la plaque intermédiaire peut comporter des chicanes.

Pour des raisons de facilité de montage du dispositif de l'invention, les plaques support sont planes et parallélépipédiques et équipées chacune d'un passage pour les conducteurs d'alimentation électrique des électrodes.

L'alimentation et l'évacuation de la solution ionique de l'espace inter-électrodes peuvent être réalisées à l'aide de deux tubulures traversant l'une ou l'autre des deux plaques support, perpendiculairement à leurs surfaces, ou bien les deux plaques support. Autrement dit l'alimentation et l'évacuation de la solution de la cellule coulométrique peuvent se faire du même côté de la cellule ou de part et d'autre de la cellule.

Conformément à l'invention, l'anode et/ou la cathode sont constituées de matériaux consommables contenant essentiellement les ions devant constituer la solution étalon.

Dans le cas particulier de la production d'une solution ionique étalon contenant des ions halogénure, on utilise une cathode constituée d'une pastille compactée contenant un halogénure métallique généralement associé à une poudre métallique. Par exemple, pour la production d'ions chlorure, on utilise une pastille compactée constituée d'une poudre d'argent et d'une poudre de chlorure d'argent. De même, pour la production d'ions bromure et d'ions iodure, on utilise une pastille compactée contenant de l'argent et respectivement du bromure d'argent et de l'iodure d'argent.

De même pour la production d'ions zinc et d'ions cuivre, on utilise respectivement des électrodes de cuivre et de zinc.

Les différentes électrodes utilisables dans l'invention, et spécifiques des ions à produire sont en particulier celles décrites dans le document FR-A-2 203 518.

La production d'un type d'ions donné est fonction, en plus de la nature des électrodes, de la tension appliquée aux bornes de ces électrodes.

De plus, l'électrode associée à l'électrode consommable est choisie de façon à éviter la production d'ions gênants, soit par réaction d'oxydo-réduction, soit par réaction de précipitation, soit par un dégagement gazeux.

Dans le cas particulier de la production d'ions chlorure à partir d'une cathode en chlorure selon la réaction :

$$AgCl + e^- \longrightarrow Ag^o + Cl^-$$

on peut utiliser comme anode du cuivre, de l'or, du plomb, du platine, de l'oxyde de tellure ($TeO_2$), de l'oxyde de plomb ($PbO_2$) et de l'oxyde de manganèse ($MnO_2$). De préférence, on utilise une anode en cuivre ; la réaction d'oxydo-réduction correspondante est la suivante :

$$Cu \longrightarrow Cu^{2+} + 2e^-$$

L'utilisation d'une anode en cuivre permet en outre la production d'ions $Cu^{+2}$ et donc la production d'une solution étalon en ions $Cu^{2+}$.

Afin d'éviter la décomposition de l'eau, et donc la production d'autres ions que ceux souhaités, le pH doit être ajusté à une valeur convenable.

Dans le cas particulier d'une électrode en AgCl, pour la production d'ions chlorure, on utilise un pH de 3,5 à 4.

D'autres caractéristiques et avantages de l'invention ressortiront mieux de la description qui va suivre, donnée à titre illustratif et non limitatif, en référence aux dessins annexés dans lesquels :
- la figure 1 représente schématiquement une vue éclatée du dispositif conforme à l'invention,
- la figure 2 représente schématiquement une vue en coupe longitudinale de la cellule coulométrique de la figure 1,
- la figure 3 représente schématiquement une chaîne de mesure d'ions chlorure équipée du dispositif de la figure 1.

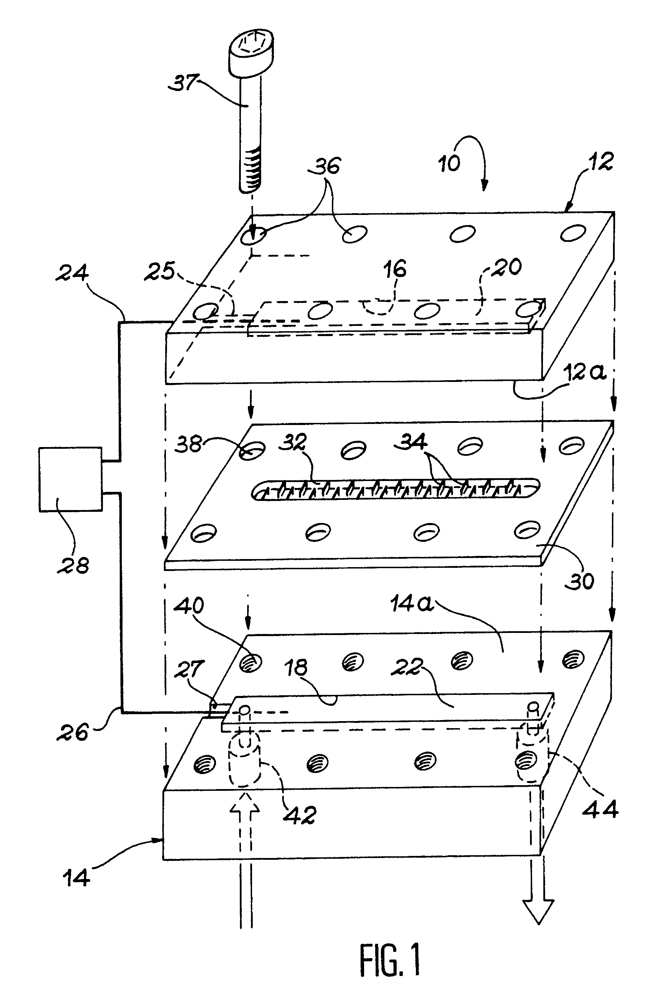

Le dispositif de production d'une solution étalon conforme à l'invention comporte, comme représenté sur la figure 1, une cellule coulométrique de référence générale 10 comportant essentiellement une plaque support supérieure 12, en matériau isolant électrique et une plaque support inférieure 14 aussi en matériau isolant électrique. Ces plaques support 12 et 14, de forme parallélépipédique, sont en outre réalisées en un matériau inerte chimiquement par rapport aux ions à produire. Dans le cas de la production d'ions chlorure, ces plaques sont en particulier réalisées en polychlorure de vinyle (PVC).

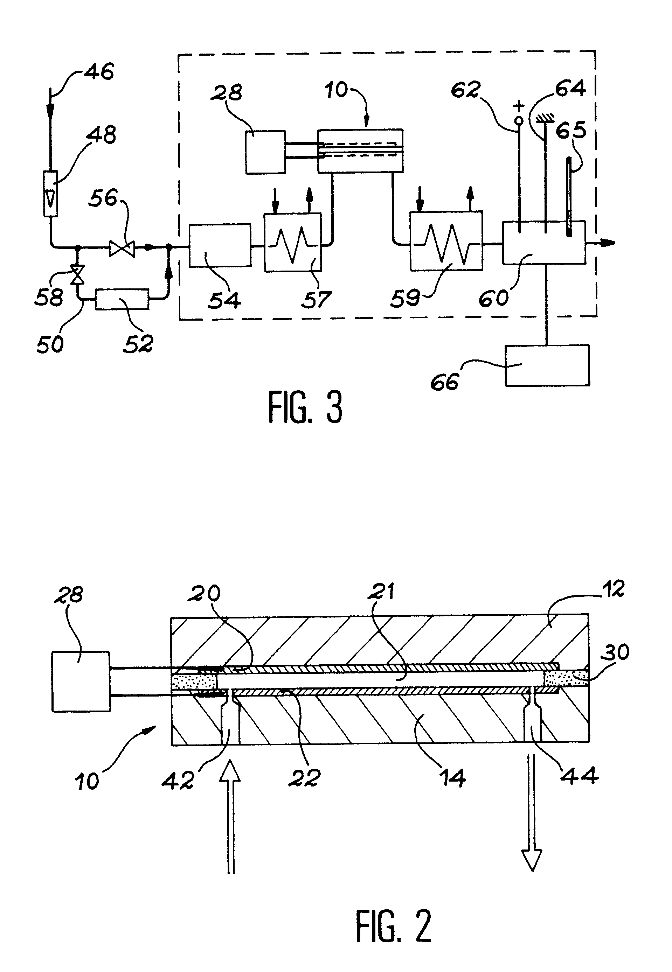

Les faces respectivement 12a et 14a des plaques 12 et 14, destinées à être disposées en regard, sont équipées chacune d'une rainure 16 et 18 de forme allongée, dans laquelle sont logées respectivement une cathode 20 et une anode 22. Ces rainures 16 et 18 sont pratiquées dans les plaques 12 et 14 de façon que la cathode 20 et l'anode 22 soient disposées l'une en face de l'autre lors de l'assemblage de la cellule, comme représenté sur la figure 2.

Pour la production d'ions chlorure, la cathode 20 est constituée par exemple d'une poudre compactée sous forme d'une plaquette allongée, contenant 30% en poids de poudre d'argent et 70% en poids de chlorure d'argent. Un fil métallique 24, en particulier d'argent ou de platine recouvert d'argent, dont l'une des extrémités est noyée dans la matière d'électrode, permet d'amener le courant à l'électrode.

Par ailleurs, l'anode 22 est constituée, pour la production d'ions chlorure, d'une plaque de cuivre allongée, un fil conducteur 26 de cuivre dont l'une des extrémités est soudée sur la plaque de cuivre permet d'amener le courant à l'électrode 22.

Une source d'alimentation électrique 28, à courant stabilisé dont on peut régler l'intensité, est connectée via les conducteurs 24 et 26 respectivement à l'anode et la cathode, des passages 25 et 27 étant pratiqués respectivement dans les plaques 12 et 14 pour assurer la sortie de ces conducteurs 24 et 26 de la cellule coulométrique 10.

La cellule de l'invention comporte de plus une plaque intermédiaire 30, de forme parallélépipédique, réalisée en Téflon et servant de joint d'étanchéité lors de l'assemblage de la cellule. (figure 2). Cette plaque 30 est équipée d'une fente centrale de forme allongée (ovale ou rectangulaire) destinée à être placée en regard de l'anode et de la cathode. Cette fente centrale 32 permettant la circulation de la solution étalon à fabriquer, comporte des chicanes 34 favorisant l'homogénéisation de cette dernière.

Les plaques support 12 et 14 et la plaque intermédiaire 30 sont équipées de perforations 36, 38, 40 pour le passage de vis 37 destinées à l'assemblage de la cellule coulométrique.

Enfin, la cellule est équipée d'une tubulure d'amenée 42 de la solution étalon à fabriquer et d'une tubulure d'évacuation 44 de la solution étalon fabriquée, ces tubulures débouchant dans l'espace inter-électrodes 21.

Dans le mode de réalisation représenté sur les figures 1 et 2, ces tubulures 42 et 44 sont situées d'un même côté de la cellule coulométrique et en particulier traversent de part en part uniquement la plaque support 14.

La cellule coulométrique de l'invention est destinée à fonctionner en continu, avec une solution ionique circulant en continu entre l'anode et la cathode. Le débit de la solution étalon à fabriquer définit le temps de présence de la solution dans l'espace inter-électrodes 21. Avec un temps de passage fixe de la solution entre les électrodes, la quantité d'ions chlorure produite ne dépend que de l'intensité du courant appliqué aux électrodes (loi de Faraday). Il est ainsi possible de tracer, pour chaque type de cellule coulométrique et pour un débit donné de la solution ionique, la courbe de variations de la concentration d'ions chlorure en fonction de l'intensité ; la concentration en ions chlorure pour une intensité donnée peut être vérifiée par chromatographie ionique ou par une méthode volumétrique.

Le dispositif actuellement fabriqué garantit une efficacité de 100% jusqu'à une production d'ions chlorure de $10^{-3}$ M.

En outre le dispositif de l'invention a une durée de vie importante sans intervention de l'opérateur. Cette durée de vie est fonction bien entendu de la concentration d'ions produite et de la taille des électrodes.

Avec le modèle actuellement fabriqué, on peut produire $10^{-4}$ M d'ions chlorure pendant 24 heures.

Le modèle actuellement fabriqué comporte les caractéristiques suivantes :
- dimensions hors tout 80 mm x 40 mm ;
- espace inter-électrodes 1 mm ;
- dimensions des électrodes 65 mm x 10 mm x 3 mm.

Avec ce modèle et un débit de la solution de 500 ml/h, le rendement de la cellule coulométrique, pour la production d'ions Cl⁻ à partir d'une cathode en chlorure d'argent et une anode en cuivre, est de 0,075 M/ampère dans la gamme de concentrations allant de $10^{-3}$ M à $10^{-7}$ M.

Le dispositif conforme à l'invention peut être inséré directement dans une chaîne de mesure d'ions et en particulier dans une chaîne de mesure d'ions chlorure, telle que représentée sur la figure 3.

De façon simplifiée, cette chaîne de mesure comprend une conduite d'alimentation en solution à mesurer 46 équipée d'un débitmètre 48 fixant en particulier le temps de passage de la solution étalon dans l'espace inter-électrodes 21 de la cellule coulométrique 10. Cette conduite d'amenée 46 est équipée d'une conduite de dérivation 50 sur laquelle est montée une colonne de désionisation 52. La colonne de désionisation permet d'obtenir une eau déminéralisée supérieure à 18 MΩ.cm à 25°C à l'entrée de la chaîne de mesure.

Cette conduite de dérivation permet la production de la solution étalon destinée à l'étalonnage de la chaîne de mesure. Les vannes 56 et 58 montées respectivement sur les conduites 46 et 50 permettent le passage soit de la solution de l'installation dont on veut mesurer la concentration en ions chlorure, soit de la solution étalon pour l'étalonnage de la chaîne de mesure.

La chaîne de mesure est équipée d'un dispositif d'acidification 54 nécessaire au dosage des ions chlorure dans la solution issue de l'installation. Ce dispositif d'acidification 54 permet en outre lors de l'étalonnage de la chaîne de mesure d'acidifier l'eau déminéralisée issue de la conduite 50 avec un acide ne renfermant pas l'ion à produire dans la cellule coulométrique 10 de l'invention et dans le cas présent l'ion chlorure. On utilise en particulier un acide organique tel que l'acide acétique ou l'acide formique ou encore l'acide phosphorique.

Cette acidification de la solution étalon à produire permet d'améliorer la conductivité électrique dans la cellule coulométrique 10.

En sortie du dispositif d'acidification 54 et en amont de la cellule 10, on trouve un échangeur de chaleur 57 du type serpentin permettant le refroidissement et l'agitation de la solution dont on veut mesurer la concentration en ions mais aussi le refroidissement de la solution étalon. De même, un échangeur de chaleur 59 du type serpentin est placé en sortie de la cellule coulométrique 10.

Le refroidissement de la solution à doser et de la solution à étalonner permet de diminuer la solubilité des électrodes, et dans le cas d'une chaîne de mesure de chlorure la solubilité de la cathode, augmentant ainsi la sensibilité de l'électrode de mesure 62 et celle de la cellule coulométrique. En effet, le produit de solubilité des électrodes varie avec la température.

En sortie de l'échangeur de chaleur 57, on trouve la cuve de mesure ou de dosage 60 dans laquelle plonge une électrode de mesure 62 dont la constitution est fonction de l'ion à mesurer et une électrode de référence 64. Pour les chlorures, l'électrode de mesure 62 est une électrode de chez TACUSSEL vendue dans le commerce sous la référence PCLGSM et l'électrode de référence 64, une électrode au chlorure d'argent, au calomel ou au sulfate de mercure.

Un thermomètre 65 permet de mesurer la température de la solution à étalonner et un millivoltmètre 68 permet de mesurer la différence de potentiel régnant entre l'électrode de mesure 62 et l'électrode de référence 64. La lecture du millivoltmètre permet de déterminer la concentration en ions de la solution issue de l'installation.

Pour de plus amples détails sur la mesure de la quantité d'ions chlorure dans une solution aqueuse, on peut se référer au document FR-A-2 288 310.

A l'aide du dispositif conforme à l'invention, on peut assurer l'étalonnage d'une chaîne de mesure à un niveau bas (point d'étalonnage à $3.10^{-7}$ M et à $15.10^{-7}$ M à une fréquence de 1 étalonnage par jour d'une durée de 5 minutes par point, pendant une quarantaine d'années).

Le dispositif conforme à l'invention est en particulier utilisable dans les techniques d'ajouts dosés.

## Revendications

1. Dispositif de production d'une solution ionique étalon contenant des ions déterminés à une concentration déterminée, caractérisé en ce qu'il comprend essentiellement une cellule coulométrique (10) comportant une enceinte étanche (12, 14, 30) en isolant électrique, renfermant une cathode (20) et une anode (22) disposées en regard et définissant entre elles un espace (21) destiné au passage de la solution à enrichir par lesdits ions, des conduites respectivement d'amenée (42) de la solution à enrichir en ions et d'évacuation (44) de la solution enrichie en ions, débouchant dans ledit espace (21), des conducteurs d'alimentation électrique (24, 26) de la cathode et de l'anode, la cathode et/ou l'anode contenant ces ions et étant apte à les libérer lors du passage du courant, et une source d'alimentation électrique (28), stabilisée en courant, reliée auxdits connecteurs (24, 26).

2. Dispositif selon la revendication 1, caractérisé en ce que l'enceinte est constituée de deux plaques support, isolantes (12, 14) en regard, revêtues respectivement de la cathode (20) et de l'anode (22) et assemblées de manière étanche par leurs bords.

3. Dispositif selon la revendication 2, caractérisé en ce que les plaques support sont chacune équipée d'une rainure (16, 18) dans laquelle sont logées respectivement la cathode (20) et l'anode (22).

4. Dispositif selon la revendication 2 ou 3, caractérisé en ce que la cellule coulométrique comporte en outre une plaque intermédiaire (30) en isolant électrique, présentant en regard de la cathode et de l'anode une fente (32) destinée au passage de la solution et jouant le rôle de joint d'étanchéité.

5. Dispositif selon la revendication 4, caractérisé en ce que la plaque intermédiaire (30) comporte des chicanes (34) au niveau de la fente (32) pour homogénéiser la solution.

6. Dispositif selon l'une quelconque des revendications 1 à 5, caractérisé en ce que les conduites d'amenée (42) et d'évacuation (44) de la solution traversent au moins une plaque support (12, 14) perpendiculairement à sa surface.

7. Dispositif selon l'une quelconque des revendications 1 à 6 pour la production d'une solution ionique étalon contenant des ions halogénure, caractérisé en ce que la cathode (20) est constituée d'une poudre compactée contenant un métal et un halogénure.

8. Dispositif selon la revendication 7, caractérisé en ce que la cathode (20) est constituée d'une poudre d'argent et d'une poudre d'un halogénure d'argent.

9. Dispositif selon l'une quelconque des revendications 1 à 8, caractérisé en ce que l'enceinte (12, 14) est en polyohlorure de vinyle.

10. Dispositif selon l'une quelconque des revendications 4 à 9, caractérisé en ce que la plaque intermédiaire (30) est en Téflon.

11. Dispositif selon l'une quelconque des revendications 7 à 10, caractérisé en ce que l'anode (22) est en cuivre.

FIG.1

FIG. 3

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,Y | EP-A-0 347 314  (J.L. FRANCARD) <br> * Page de garde * <br> --- | 1 | G 01 N   27/44 |
| Y | US-A-3 966 413  (G. MARINENKO) <br> * Page de garde * <br> --- | 1 | |
| A | US-A-3 374 161  (J. ZATZ) <br> * Figures 2,3 * <br> --- | 1 | |
| A | EP-A-0 039 549  (I.C.I.) <br> * Résumé * <br> --- | 1 | |
| A | GB-A-2 192 139  (D. HOERLER) <br> * Page de garde * <br> ----- | 1 | |

DOMAINES TECHNIQUES
RECHERCHES (Int. Cl.5)

G 01 N

Le présent rapport a été établi pour toutes les revendications

| Lieu de la recherche | Date d'achèvement de la recherche | Examinateur |
|---|---|---|
| LA HAYE | 10-10-1990 | DUCHATELLIER M.A. |

CATEGORIE DES DOCUMENTS CITES

X : particulièrement pertinent à lui seul
Y : particulièrement pertinent en combinaison avec un
      autre document de la même catégorie
A : arrière-plan technologique
O : divulgation non-écrite
P : document intercalaire

T : théorie ou principe à la base de l'invention
E : document de brevet antérieur, mais publié à la
      date de dépôt ou après cette date
D : cité dans la demande
L : cité pour d'autres raisons
 
& : membre de la même famille, document correspondant